Europäisches Patentamt

European Patent Office

Office européen des brevets

(11) Veröffentlichungsnummer : **0 472 253 B1**

# (12) EUROPÄISCHE PATENTSCHRIFT

(45) Veröffentlichungstag der Patentschrift :
27.07.94 Patentblatt 94/30

(51) Int. Cl.$^5$ : **B23B 5/10**

(21) Anmeldenummer : **91250231.7**

(22) Anmeldetag : **21.08.91**

---

(54) **Verfahren und Vorrichtung zur Kaliberbearbeitung von Warmpilgerwalzen.**

---

(30) Priorität : **23.08.90 DE 4026898**

(43) Veröffentlichungstag der Anmeldung :
**26.02.92 Patentblatt 92/09**

(45) Bekanntmachung des Hinweises auf die
Patenterteilung :
**27.07.94 Patentblatt 94/30**

(84) Benannte Vertragsstaaten :
**DE FR GB IT**

(56) Entgegenhaltungen :
**DE-B- 2 153 374**

(73) Patentinhaber : **MANNESMANN
Aktiengesellschaft
Postfach 10 36 41
D-40027 Düsseldorf (DE)**

(72) Erfinder : **Genter, Karl Ernst
Corellistrasse 13
W-4000 Düsseldorf 1 (DE)**

(74) Vertreter : **Presting, Hans-Joachim, Dipl.-Ing.
et al
Meissner & Meissner,
Patentanwaltsbüro,
Postfach 330130
D-14171 Berlin (DE)**

## Beschreibung

Die Erfindung betrifft ein Verfahren zur Kaliberbearbeitung von Warmpilgerwalzen auf einer computernumerisch gesteuerten Walzendrehmaschine, bei der die Kaliberform der Walzen in mathematisch erfassbare, zusammengesetzte Kurven ausgedrückt in einem Rechner abrufbar gespeichert wird und bei der die in jedem Punkt durch das Koordinatensystem der Achsen beschreibbare Kaliberoberfläche durch die in lineare und totative Bewegungen des als Drehstahl ausgebildeten Werkzeuges bearbeitbar ist.

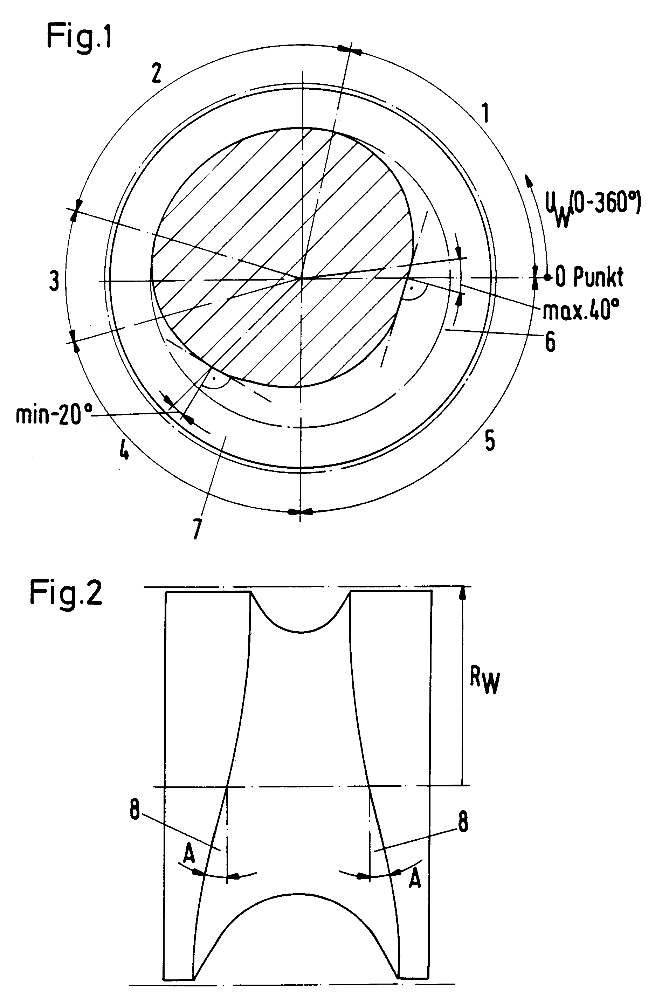

Die in Pilgerwalzwerken verwendeten Walzen (Figur 1) besitzen eine ganz spezielle Kaliberform, die durch das Warmpilgerverfahren vorgegeben ist. Bekanntlich werden in derartigen Pilgerwalzwerken Hohlblöcke mit großem Durchmesser und dicker Wand über einen Dorn zu einem Rohr mit geringem Durchmesser und kleiner Wanddicke ausgewalzt, wobei im Nullpunkt des Walzenumfanges der Kaliberdurchmesser dem Hohlblockdurchmesser angepaßt ist. Von hier aus (Bereich 1, Figur 1) verjüngt sich der Kaliberdurchmesser nach einer theoretischen oder empirischen Funktion bis zum Glättkaliber (Bereich 2, Figur 2), dessen Durchmesser dem Rohrdurchmesser angepaßt ist. Im Glättkaliber selbst erfolgt keine Veränderung des Kaliberdurchmessers. Erst am Ende des Glättkalibers wird dieses leicht konisch geöffnet, um die Walzkräfte und Walzspannungen kontinuierlich abbauen zu können (Bereich 3, Figur 1). Im Anschluß daran erfolgt eine Vergrößerung des Kaliberdurchmessers zum Leerkaliber (Bereich 4, Figur 1) hin und wieder eine Verkleinerung zum Walzennullpunkt (Bereich 5, Figur 1).

Aus dieser Form der Kaliberwalze und aus diesem Verlauf des Kalibers ergeben sich Steigungswinkel, die zwischen maximal 40 Grad im Nullpunkt bis minimal minus 20 Grad im Bereich zwischen Glättkaliber und Leerkaliber anzugeben sind (Figur 1).

Bei der Pilgerwalzwerken eigentümlichen Kaliberform ergaben sich stets Probleme bei der Herstellung der Kaliberwalzen. Es hat sich in der Vergangenheit gezeigt, daß die Walzen von Warmpilgerwalzwerken am günstigsten mit Drehstählen und Hartmetallschneiden erstellt werden können. Dazu finden Walzendrehmaschinen Verwendung, die computernumerisch gesteuert nach mathematisch vorgegebenen Kurven und durch Bewegung des Schneidwerkzeuges in mehreren Achsen das gewünschte Kaliber herstellen.

Wenn, wie vorstehend dargestellt, der Steigungswinkel des Kalibers in großen Breiten variiert, so entsteht daraus ein Problem beim Einsatz von Schneidstählen, weil deren Freiwinkel und Spanwinkel ebenfalls in großen Bereichen veränderlich sind. Bei bekannten Bearbeitungsmaschinen der beschriebenen Art schwanken die Freiwinkel zwischen 3 Grad und 68 Grad, der Spanwinkel schwankt zwischen 65 Grad und 130 Grad. Es ist leicht einzusehen, daß bei diesen Schwankungen nur in einigen wenigen Relativstellungen des Werkzeuges zur zu bearbeitenden Walze eine optimale Zerspanung erzielbar ist, was über den Gesamtbearbeitungsvorgang nicht erreichbar sein kann. Man hat zwar versucht, durch Kompromisse bei dem eingestellten Schnittwinkel die extrem positiven und extrem negativen Werte zu vermeiden, doch bedeutete dies auch einen Kompromiss bei der möglichen Bearbeitungsgeschwindigkeit, die bei bekannten Maschinen auf maximal 6 m/min. begrenzt ist.

Die vorliegende Erfindung hat sich, ausgehend von den dargestellten Problemen und Nachteilen, zum Ziel gesetzt, eine computernumerisch gesteuerte Walzendrehmaschine der bekannten Art so zu verbessern, daß durch Optimierung der Schneidengeometrie am Werkzeug eine erhebliche Leistungssteigerung erzielt wird.

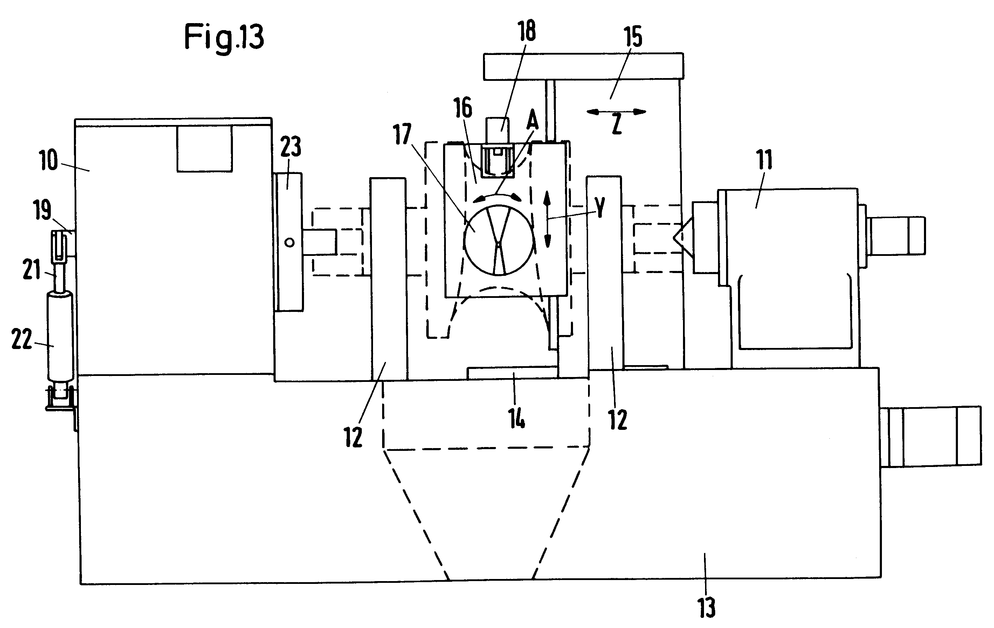

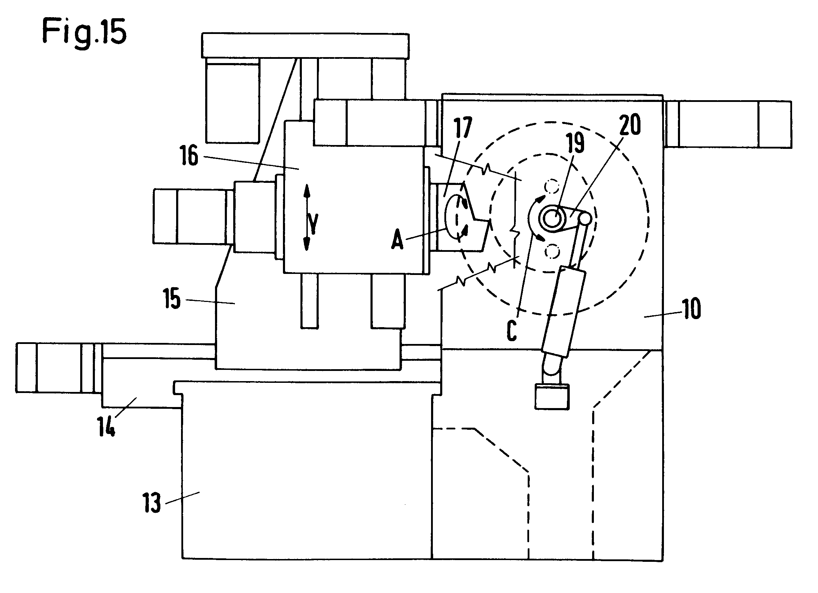

Zur Lösung der Aufgabe wird ein Verfahren vorgeschlagen, wie es im Patentanspruch 1 beschrieben ist. Dabei ist als wichtiger Kern der Erfindung anzusehen, daß durch Bewegung des Drehstahles in vertikaler Richtung (Y-Achse, Figuren 13 und 15) quer zur Walzenachse und gleichzeitiger Drehung um seine Längsachse (A-Achse, Figuren 13 und 15) eine optimierte Einstellung des Werkzeuges auf die jeweils günstigste Schnittgeometrie ermöglicht wird. Welche Einstellung jeweils optimal ist, bestimmt der angeschlossene Rechner, in den die Walzenabmessungen und deren Parameter eingegeben werden und in dem die Daten des zu erstellenden Kalibers abgelegt sind.

Der Rechner berechnet für ein vorgegebenes Kaliber in Abhängigkeit vom Kaliberquerschnittswinkel $\psi$ und dem Walzenumfangswinkel $U_w$ sowohl die Koordination des jeweiligen Stützpunktes, als auch den Steigungs-winkel $W_s$ aus diesen Werten sowohl die Sollwerte für die Achsen, als auch die Bahngeschwindigkeit. Sobald die Daten für die erste Walzenumdrehung vorliegen, werden sie in die Walzendrehmaschine übergeben und dort abgearbeitet. Während dieser Arbeit berechnet der online-geschaltete Rechner die Daten für die nächste Walzenumdrehung und übergibt sie an die Maschine. Die Bahngeschwindigkeit wird der Zykluszeit der Walzendrehmaschine und der Rechnergeschwindigkeit angepaßt.

Eine Walzendrehmaschine zur Durchführung des Verfahrens ist so gestaltet, daß der Drehstahl mit seinem Halter tangential zum Walzendurchmesser verfahrbar und um seine Längsachse drehbar ist. Erst durch diese Maßnahme wird es möglich, in optimaler Weise die Schnittleistungen der Maschine dadurch zu erhöhen, daß die Schneidengeometrie dem jeweiligen Kaliberdurchmesser angepaßt ist. Die sich daraus ergebende variable Schnittgeometrie erlaubt den Einsatz von herkömmlichen genormten Hartmetallschneidstählen einerseits und vor allem eine Erhöhung der Schnittgeschwindigkeit bis zum 10-fachen. Gleichzeitig erhöht sich die Standzeit der verwendeten runden Schneidplatten, so daß eine wesentlich höhere Leistungsfähigkeit der Maschine durch diese Maßnahmen erzielbar ist.

Vorzugsweise ist der mit der Walzendrehmaschine zusammenarbeitende Rechner als online geschalteter schneller Tischrechner ausgebildet.

Die Geometrie der Kaliberwalze bringt es mit sich, daß nach Einspannen in der Walzendrehmaschine der Schwerpunkt der Walze exzentrisch zur Drehachse liegt . Zur Kompensation des daraus resultierenden veränderlichen Drehmomentes ist eine Ausgleichsvorrichtung am verlängerten Antriebszapfen der Walze vorgesehen, die nach einem besonderen Merkmal der Erfindung aus einem Hebel besteht, der einerseits auf dem Antriebszapfen der Walze klemmbar ist und der andererseits mit einer druckeinstellbaren Kolben-Zylinder-Einheit verbunden ist, die gegen den Rahmen der Walzendrehmaschine abgestützt ist. Die Kompensation erfolgt durch Vergleich der Stromaufnahme beim Ulauf des Schwerpunktes.

Ein Ausführungsbeispiel der Erfindung ist in den Zeichnungen dargestellt und wird nachfolgend beschrieben. Es zeigt:

Fig. 1      den Querschnitt durch eine Warmpilgerwalze mit Einteilung der Kaliber,

Fig. 2      eine Vorderansicht der Walze nach Figur 1,

Fig. 3      ebenfalls eine Vorderansicht der Pilgerwalze mit eingetragenen Winkeln,

Fig. 4      einen Walzenquerschnitt mit eingetragenen Steigungswinkeln,

Fig. 5 bis 7      drei Stellungen der Pilgerwalzen relativ zum Drehstahl,

Fig. 8      eine Vorderansicht der Pilgerwalze mit zwei Drehstahlstellungen im Null-Punkt,

Fig. 9      einen Ausschnitt aus einem Pilgerwalzkaliber mit der Fixierung eines Punktes,

Fig. 10      einen Radialschnitt durch den fixierten Punkt nach Figur 10,

Fig. 11      einen Axialschnitt durch den in Figur 9 und 10 fixierten Punkt,

Fig. 12      einen Schnitt parallel zum Radiusvektor durch den fixierten Punkt nach Figur 9 bis 11,

Fig. 13 bis 15      zeigen die erfindungsgemäße Walzendrehmaschine in drei Ansichten.

In Figur 1 ist mit 1 das Maul des Kalibers, mit 2 das Glättkaliber, mit 3 der Auslauf, mit 4 die Öffnung und mit 5 die Verjüngung zum Nullpunkt der Kaliberwalze hin dargestellt. Im Nullpunkt ist der maximale Steigungswinkel 6 der Walze eingetragen, der bis zu 40 Grad betragen kann. In der Öffnung 4 ist der minimale Steigungswinkel 7 eingetragen, der bis zu minus 20 Grad betragen kann. Vom Nullpunkt aus ist der Verlauf des Umfangswinkels $U_w$ (0 Grad bis 360 Grad) eingetragen.

Figur 2 zeigt eine Vorderansicht der Pilgerwalze mit Blick auf den Nullpunkt und den maximalen Schwenkwinkel 8 der A-Achse und den ideellen Walzenradius $R_w$.

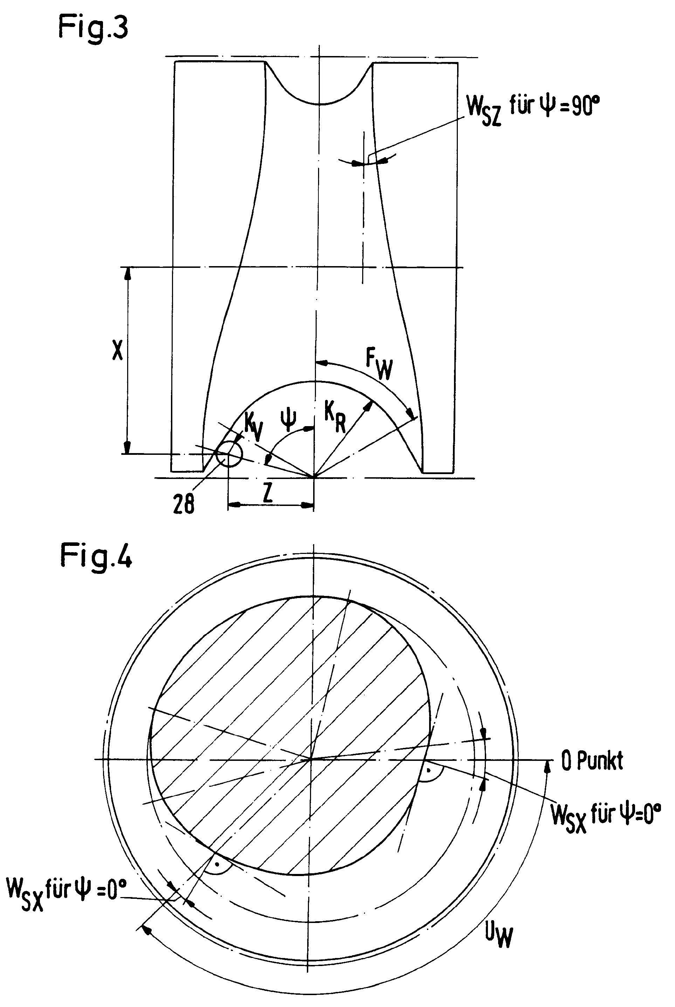

In Figur 3 ist die Vorderansicht einer Pilgerwalze mit eingetragenem Freischnittwinkel, Radiusvektor und der Axialkomponente $W_{sz}$ im Kalibernullpunkt für den Querschnittwinkel $\psi$ = 90 Grad dargestellt.

In der Leerkaliberöffnung ist die Stellung des als Drehstahl benutzten Drehpilzes 28 mit Werkzeugradius $K_V$ unter dem Querschnitt eingetragen mit den Stellungen von X- und Z-Achse.

Figur 4 stellt einen Walzenquerschnitt mit den eingetragenen Steigungswinkeln $W_{sx}$ im Kalibergrund $\psi$ = 0 Grad und Kalibernullpunkt und dem Steigungswinkel $W_{sx}$ im Kalibergrund $\psi$ = 0 Grad im Abstand $U_w$ vom Kalibernullpunkt dar.

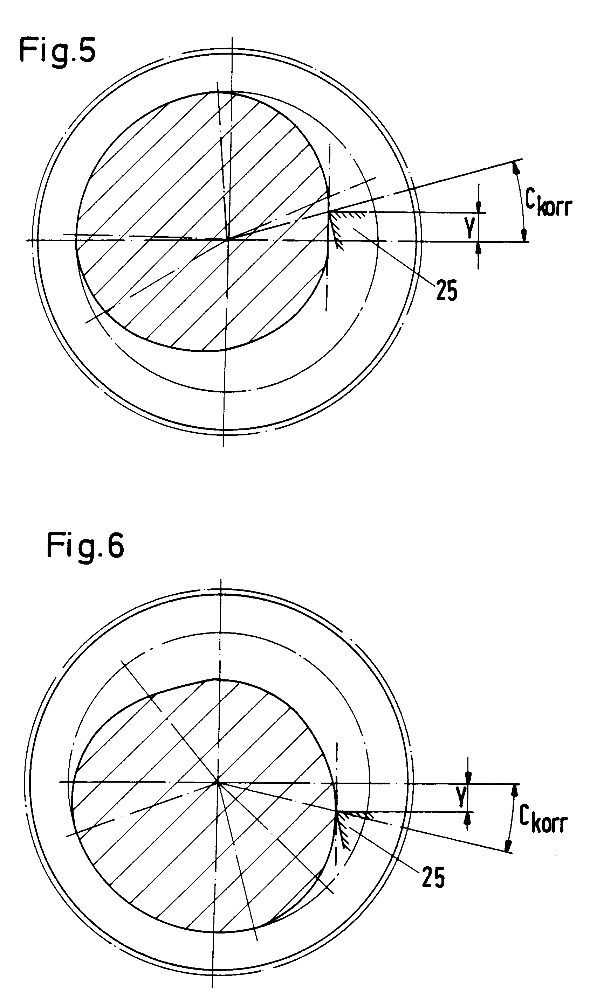

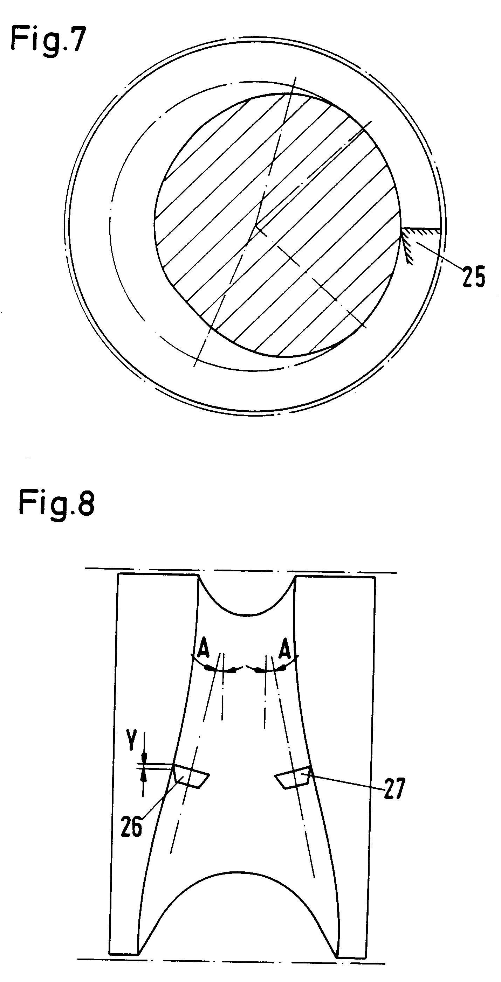

Die Figuren 5 bis 7 beschreiben einen Pilgerwalzenquerschnitt mit drei Stellungen des Drehstahles 25, wobei in Figur 5 der Drehstahl im Nullpunkt mit Korrektur $C_{korr}$ der C-Achse und Y der Y-Achse dargestellt ist. In Figur 6 ist der Drehstahl im Punkt des minimalen Steigungswiklels mit Korrektur der C-Achse und der Y-Achse gezeichnet, während in Figur 7 der Drehmeißel im Glättkaliber ohne Korrektur gezeichnet ist.

In Figur 8 ist die Vorderansicht der Pilgerwalze mit zwei Drehmeißelstellungen im Nullpunkt erkennbar, wobei der Drehmeißel 26 auf der linken Seite der Zeichnung um Winkel A geschwenkt und um minus Y korrigiert ist. Der Drehmeißel 27 auf der rechten Seite ist um Winkel minus A geschwenkt und um minus Y korrigiert.

In den Figuren 9 bis 12 ist der Punkt 24 am Umfang der Kaliberwalze durch die verschiedenen Winkel fixiert.

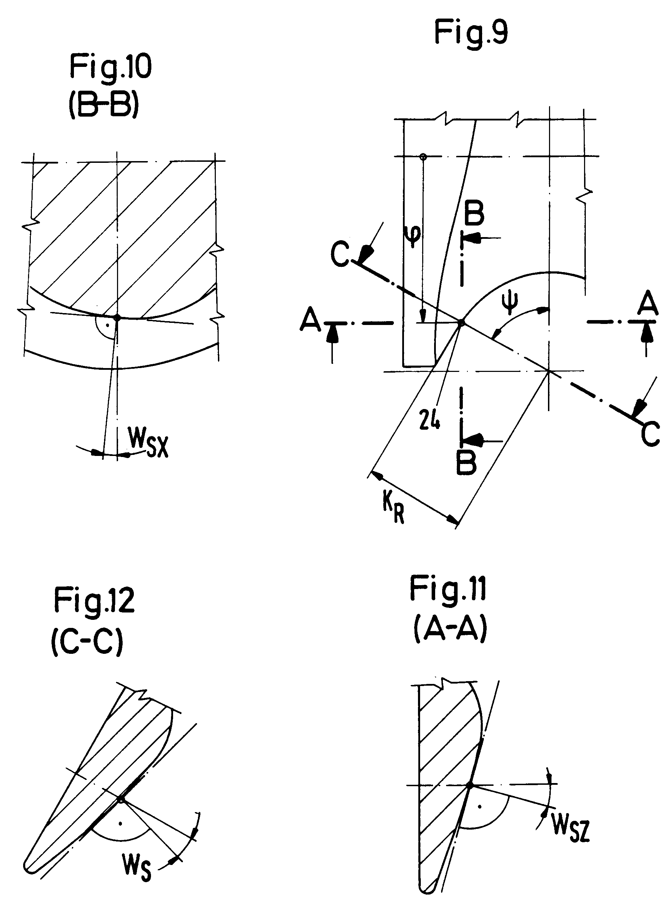

In Figur 9 wird ein Punkt gezeigt, für den als Beispiel der Steigungswinkel und seine Komponenten in X- und Z-Richtung gezeigt werden soll. Dieser Punkt ist durch den in Figur 4 gezeigten Walzenumfangswinkel $U_w$, den Querschnittswinkel $\psi$ und den aktuellen Kaliberradius $K_R$ bestimmt. Der Steigungswinkel $W_s$, dargestellt in Figur 12, errechnet sich $W_s$ = arctg ($dK_R/dU_w$ : $\rho$), wobei $dK_R/dU_w$ der Differantialquotient vom Kaliberradius $K_R$ nach dem Umfangswinkel $U_w$ und $\rho$ der aktuelle Walzenradiusvektor ist.

In Figur 10 ist die radiale Komponente des Steigungswinkels $W_s$

$$W_{sx} = arctg (tg (W_s) * COS (\psi))$$

dargestellt.

In Figur 11 ist die axiale Komponente des Steigungswinkels $W_s$

$$W_{sz} = \text{arctg} \, (\text{tg} \, (W_s) \, * \, \sin \, (\psi)$$

dargestellt.

Die Steigungswinkel und ihre Komponenten in X- und Z-Richtung werden zur Berechnung der Korrekturen benötigt.

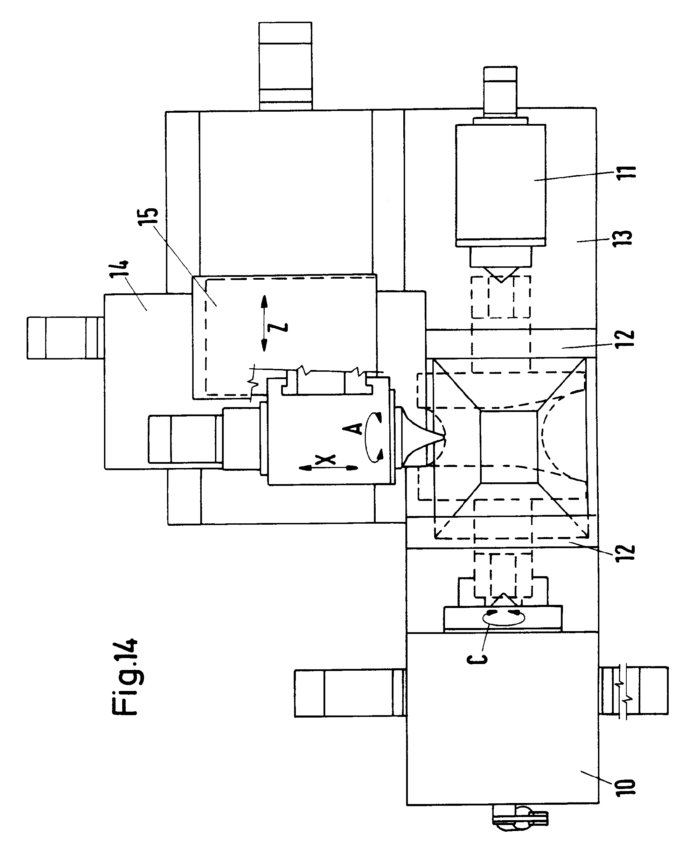

In Figuren 13 bis 15 ist die erfindungsgemäße Walzendrehmaschine in Draufsicht, Vorder- und Seitenansicht dargestellt; die zu bearbeitende Kaliberwalze ist gestrichelt eingezeichnet. Die Kaliberwalze ist im Spindelkasten 10 mit der Hauptspindel 19 und im Reitstock 11 zwischen Spitzen gespannt und am Zapfen durch zwei Lünetten 12 gestützt, die ihrerseits auf dem Maschinenbett 13 angeordnet sind. Auf dem hinteren Teil des Maschinenbettes 13 ist der Supportschlittten 14 (Z-Achse) mit dem Supportständer 15 (X-Achse) dem Support 16 (Y-Achse), mit einer Fernsehkamera 18 zur Beobachtung des Schnittvorganges und mit dem um plus/minus 45 Grad drehbaren Stahlhalter 17 (A-Achse) angeordnet.

Am hinteren Ende des Spindelkastens ist auf einem hier hervorragenden Zapfen der Hauptspindel 19 ein Hebel 20 angeordnet, der auf dieser in jeder Lage festklemmbar ist. Am Ende des Hebels ist eine Kolbenstange 21 befestigt, die Teil eines Hydraulikzylinders 22 ist, der an seinem unteren Ende mit dem Spindelkasten verbunden ist.

Die Arbeitsweise der Maschine ist wie folgt:

Auf der Walze wird eine Anzahl Querschnitte als Stützpunkte festgelegt, für die Grunddaten Kaliberradius $K_R$, Freischnittwinkel $F_w$, Lage des Querschnitts vom Nullpunkt als Umfangswinkel $U_w$ in einem Datenfile gegeben sind. Vor der computernumerischen Steuerung wird ein schneller Tischrechner angeschlossen. Die Position der einzelnen CNC-Achsen werden für jede Walzenumdrehung und jeden Querschnitt auf dem Rechner auf folgende Weise berechnet:

Die Form des Kalibers ist bestimmt durch ein System von Funktion f (x) $U_w$, $\psi$), deren Parameter in einem Datenfile im angeschlossenen Computer niedergelegt sind, durch welche der Kaliberradiusvektor $K_R$ für jeden Punkt mit den Koordinaten $U_w$ (0 bis 360 Grad) = Umfangswinkel der Walze (Figur 1) $\psi$ (- 90 Grad bis + 90 Grad) = Querschnittswinkel des Kalibers (Figur 3) und $R_w$ = idealer Walzenradius (Figur 2) bestimmt wird. ($K_R$ = f ($U_w, \psi$). Durch Bildung des Differentialquotienten $dK_R/dU_w$ wird mit $\rho = R_w - K_R \sin \psi$ (Figur 9) für jeden Stützpunkt ($U_w, \psi$) der Steigungswinkel in Richtung der Senkrechten auf die Kaliberoberfläche in diesem Punkt berechnet mit

$$W_s = \text{arctg} \, (dK_R/dK_w:\rho) \qquad \text{(Figur 12)}.$$

Der Steigungswinkel $W_s$ wird aufgeteilt in eine radiale Komponente $W_{sx} = \text{arctg} \, (\text{tg} \, W_s \times \cos\psi)$ (Figur 10) und eine axiale Komponente $W_{sz} = \text{arctg} \, (\text{tg} \, W_s \times \sin\psi)$ (Figur 11). Mit diesen Werten und dem Werkzeugradius $K_V$ werden die Position und die Korrekturen des Werkzeuges für jeden Punkt ($U_w, \psi$) berechnet.

$$X = R_w - (K_R - K_V) \times \sin\psi \qquad \text{(Figur 3) Positionsachse}$$

$$Z = (K_R - K_V) \times \cos\psi \qquad \text{(Figur 3) Positionierachse}$$

$$Y = (R_w - K_{R)} \times \text{tg} \, W_{sx} \qquad \text{(Fig. 5 u. 6) Korrekturachse } (W_{sx})$$

$$A = W_{sz} \qquad \text{(Figur 8) Werkzeug Schwenkachse}$$

$$C_{korr} = W_{sx} \qquad \text{(Fig. 5 u. 6) Korrektur d. Walzendrehachse}$$

$$C = U_w \text{ plus/minus } C_{korr} \qquad \text{Walzen Drehachse}$$

Diese Daten werden an die CNC-Steuerung übergeben und auf der Maschine abgefahren, wobei die CNC-Steuerung mit G64 so programmiert ist, daß die Bahn mit gleichmäßiger Geschwindigkeit gefahren wird.

Die Vorrichtung zur Kompensation der veränderlichen Drehmomente, welche auf den exzentrischen Schwerpunkt der Warmpilgerwalze zurückzuführen sind, arbeitet wie folgt:

Die Warmpilgerwalze wird zwischen den Spitzen der Maschine eingespannt, dabei stellt sich der Schwerpunkt der Walze nach unten ein. Dann wird die Hauptspindel so gedreht, daß der Mitnehmernullpunkt mit dem Walzennullpunkt übereinstimmt und der Mitnehmer 23 auf das Kleeblatt gespannt. Dann wird der Hebel auf der Hauptspindel ganz nach oben geschwenkt und dort festgeklemmt. Durch Einstellen des Hydraulikdruckes im Hydraulikzylinder wird das Drehmoment, welches aus dem umlaufenden Schwerpunkt resuliert kompensiert. Die Kompensation erfolgt durch Vergleich der Stromaufnahme beim Umlauf des Schwerpunktes.

**Patentansprüche**

1.    Verfahren zur Kaliberbearbeitung von Warmpilgerwalzen auf einer computernumerisch gesteuerten Walzendrehmaschine, bei der die Kaliberform der Walzen (24) in mathematisch erfaßbare zusammengesetzten Kurven ausgedrückt in einem Rechner abrufbar gespeichert wird, bei der die in jedem Punkt durch das Koordinatensystem der Achsen beschreibbare Kaliberoberfläche durch die in Lineare und rotatiue Bewegungen des als Drehstahl (25) ausgebildeten Werkzeuges bearbeitbar ist, wobei die geometrische Form des Kalibers (1) durch Horizontalbewegung (X-Achse) des Drehstahles (25) quer zur Walzenachse, durch Horizontalbewegung (2-Achse) des Drehstahles (25) parallel zur Walzenachse und Rotation (C-Achse) der Walze (24) erzeugt wird,
wobei
die optimale Einstellung der Werkzeugschneidenschnittwinkel in jedem Stützpunkt senkrecht zur Tangentialebene des Kalibers durch Vertikalbewegung (Y-Achse) des Drehstahles (25, 26, 27) quer zur Walzenachse und Drehung (A-Achse) des Stahles bei gleichzeitiger Korrektur der Walzendrehzahl (C) um die Axialkomponente ($W_{sz}$) des Steigungswinkels ($W_s$) abzüglich eines aus dem maximal zulässigen Spanwinkel des Stahles (25, 26, 27) errechneten Korrekturwinkels ($C_{korr}$) erfolgt, und wobei nach Hinzufügen der Walzenabmessungen und der Walzenparameter (Walzendurchmesser, Glättkaliberdurchmesser, Schnittgeschwindigkeit, Spantiefe, Vorschub) der Rechner während der Bearbeitung der Walzen (24) aus den in ihm abgelegten Daten des Kalibers (1) die Koordinatenpunkte der Bewegungsachsen (X, Y, Z und C) errechnet und der numerischen Steuerung zur interpolierenden Ausführung mitteilt.

2. Computernumerisch gesteuerte Walzendrehmaschine zur Duchführung des Verfahrens zur Bearbeitung von Warmpilgerwalzen nach Anspruch 1, bei der die Kaliberform der Walzen in mathematisch erfaßbare, zusammengesetzte Kurven ausgedrückt in einem Rechner abrufbar gespeichert wird und bei der die in jedem Punkt durch das Koordinatensystem der Achsen beschreibbare Kaliberoberfläche durch die lineare und rotative Bewegungen des als Drehstahl ausgebildeten Werkzeuges bearbeitbar ist,
wobei
der Drehstahl (25, 26, 27) mit seinem Halter (17) tangential zum Walzendurchmesser verfahrbar und um seine Längsachse (A) drehbar ist.

3. Walzendrehmaschine nach Anspruch 2,
dadurch gekennzeichnet,
daß zur Kompensation des veränderlichen Drehmomentes resultierend aus der exzentrischen Lage des Walzenschwerpunktes eine Ausgleichsvorrichtung am verlängerten Antriebszapfen der Walze angreift.

4. Walzendrehmaschine nach Anspruch 3,
dadurch gekennzeichnet,
daß die Ausgleichsvorrichtung aus einem Hebel (20) besteht, der einerseits auf dem Antriebszapfen (19) der Walze klemmbar ist und der andererseits mit einer druckeinstellbaren Kolben-Zylinder-Einheit verbunden ist, die gegen den Rahmen der Walzendrehmaschine abgestützt ist.

## Claims

1. Process for processing the form of hot pilger milling rollers on a digitally controlled machine which turns milling rollers, in which the form of the milling rollers (24) is memorized, such that this can be recalled, in a computer, as mathematically determinable, assembled curve-form characteristics, and in which the surface form of the milling rollers, which can be described by the system of coordinates of the axes concerned, can, at each and every point, be worked by means of the rotational and linear movements of the tool which is developed as a cutting tool (25), whereby the geometrical form of a section (1) of the periphery of a given milling roller is produced by horizontal movement (X-axis) of the cutting tool (25) transversely in relation to the axis of the said given milling roller, by horizontal movement (Z-axis) of the cutting tool (25) parallel to the axis of the said given milling roller and by rotation (C-axis) of the said given milling roller (24), whereby the optimum setting of the cutting angle of the said tool at each coordinated point vertical to the tangential plane of the surface form of the said given milling roller occurs by vertical movement (Y-axis) of the cutting tool (25, 26, 27) transversely in relation to the axis of the said given milling roller and rotation (A-axis) of the tool with simultaneous adjustment of the rev-rate (C) of the said given milling roller about the axial component ($W_{sz}$) of the angle of inclination ($W_s$) after subtraction of a computed correction-angle ($C_{corr}$) from the maximum permissible rake angle of the cutting tool (25, 26, 27), and whereby, after provision of the dimensions and proportions of the said given milling roller and the milling rolling parameters (diameter of the said given milling roller, diameter of the substantially round sector of the given milling roller, cutting speed, cut depth, advancing throw) the computer, during the working of the said given milling roller (24), computes the coordinates of the axes (X, Y, Z and C) of movement, from the data memorized in the said computer, and transmits the digital controlling for implementation by interpolation.

2. Digitally controlled machine, for turning milling rollers, for implementing the process of working hot pilger milling rollers in accordance with claim 1, in the case of which the form of a given milling roller is memorized, such that this can be recalled, in a computer as mathematically determinable assembled curve-form characteristics, and in the case of which the surface form of the milling rollers, which can be described by the system of coordinates of relevant axes, can, at each and every point, be worked by means of the rotational and linear movements of the tool which is developed as a cutting tool (25), whereby the cutting tool (25, 26, 27) with its mounting support (17) can be tangentially conveyed in relation to the diameter of a given milling roller and the said cutting tool can turn about its longitudinal axis (A).

3. Machine for turning milling rollers in accordance with claim 2, wherein
a compensation device engages on the extended driving pin of the said given milling roller with the object of compensating the variable moment of rotation resulting from the eccentric position of the fulcrum of the said given milling roller.

4. Machine for turning milling rollers in accordance with claim 3, wherein
the compensation device comprises a lever (20) which, on one side, can be gripped on the drive pin (19) of the said given milling roller and is connected on the other side to a piston-cylinder unit which can be regulated by pressure and is supported against the frame of the machine for turning milling rollers.

**Revendications**

1. Procédé pour usiner le calibre de cylindres de laminage à pas de pèlerin à chaud sur un tour pour cylindres de laminoir commandé de façon numérique par un ordinateur, dans lequel la forme du calibre des cylindres (24), exprimée en courbes assemblées pouvant être définies mathématiquement, est mémorisée, en pouvant être appelée, dans un calculateur, dans lequel la surface du calibre pouvant être décrite à chaque point par le système de coordonnées des 'axes peut être usinée par les déplacements rotatifs et linéaires de l'outil réalisé sous forme d'un outil de tournage (25), la forme géométrique du calibre (1) étant engendrée par déplacement horizontal (axe X) de l'outil de tournage (25) transversalement à l'axe du cylindre, par déplacement horizontal (axe Z) de l'outil de tournage (25) parallèlement à l'axe du cylindre, et par rotation (axe C) du cylindre (24), le réglage optimal de l'angle de coupe de l'outil, à chaque point d'appui, perpendiculairement au plan tangentiel du calibre, étant effectué par déplacement vertical (axe Y) de l'outil de tournage (25,26,27) transversalement à l'axe du cylindre et rotation (axe A) de l'outil en corrigeant simultanément la vitesse de rotation (C) du cylindre autour de la composante axiale ($W_{sz}$) de l'angle de pente ($W_s$) après déduction d'un angle de correction ($C_{cor}$) calculé à partir de l'angle de coupe orthogonal maximum permis de l'outil (25,26,27), et, après introduction des dimensions du cylindre et des paramètres du laminage (diamètre du cylindre, diamètre du calibre de lissage, vitesse de coupe, section de coupure, avance), le calculateur, pendant l'usinage des cylindres (24), calcule, à partir des données mémorisées en lui du calibre (1), les points de coordonnées des axes de déplacement (X,Y,Z et C) et les communique à la commande numérique pour exécution par interpolation.

2. Tour pour cylindres de laminoir, commandé de façon numérique par un ordinateur, pour la mise en oeuvre du procédé pour l'usinage de cylindres de laminage à pas de pèlerin à chaud selon la revendication 1, dans lequel la forme du calibre des cylindres (24), exprimée en courbes assemblées pouvant être définies mathématiquement, est mémorisée, en pouvant être appelée, dans un calculateur, et dans lequel la surface du calibre pouvant être décrite à chaque point par le système de coordonnées des axes peut être usinée par les déplacements rotatifs et linéaires de l'outil réalisé sous forme d'un outil de tournage, l'outil de tournage (25,26,27), avec son support (17), pouvant être déplacé tangentiellement au diamètre du cylindre et pouvant être tourné autour de son axe longitudinal (A).

3. Tour pour cylindres de laminoir selon la revendication 2, caractérisé en ce que, pour compenser le couple variable résultant de la position excentrique du centre de gravité du cylindre, un dispositif de compensation s'engage sur le tourillon d'entraînement prolongé du cylindre.

4. Tour pour cylindres de laminoir selon la revendication 3, caractérisé en ce que le dispositif de compensation est constitué d'un levier (20) qui, d'une part, peut être pincé sur le tourillon d'entraînement (19) du cylindre et qui, d'autre part, est relié à un vérin réglable en pression qui est appuyé contre le châssis du tour pour cylindres de laminoir.

# Fig.1

$u_W$(0-360°)

0 Punkt

max.40°

min-20°

# Fig.2

$R_W$

8

8

## Fig.3

W_{SZ} für ψ = 90°

X

F_W

K_V   ψ   K_R

28   Z

## Fig.4

0 Punkt

W_{SX} für ψ = 0°

W_{SX} für ψ = 0°

U_W

## Fig.5

## Fig.6

Fig.7

25

Fig.8

A    A

Y

26    27

Fig.10
(B-B)

Fig.9

$W_{SX}$

$\varphi$

B

$\psi$

A

A

C

24

B

C

$K_R$

Fig.12
(C-C)

Fig.11
(A-A)

$W_S$

$W_{SZ}$

Fig.13

EP 0 472 253 B1

Fig.14

EP 0 472 253 B1

Fig.15